# EUROPEAN PATENT SPECIFICATION

(11) **EP 2 244 521 B1**
(45) Date of publication and mention of the grant of the patent: **01.08.2018**
(21) Application number: 09158237.9
(22) Date of filing: 20.04.2009
(51) Int. Cl.: H04W 76/00, H04W 76/06, H04L 12/841, H04L 29/06

(54) **Optimizing packet data transmissions**
Optimierung von Paketdatenübertragungen
Optimisation de transmissions de données par paquets

(43) Date of publication of application: 27.10.2010
(73) Proprietor: Airbus Defence and Space Oy, 00380 Helsinki (FI)
(72) Inventor: Laaksonen, Pirkko, 33340, Tampere (FI); Huovinen, Lasse, 02130, Espoo (FI); Tuomi, Jouko, 00320, Helsinki (FI); Lagerblom, Niklas, 02770, Espoo (FI)
(74) Representative: Kolster Oy Ab

(56) References cited:
- EP-A- 1 139 613
- WO-A-2006/059932
- US-A1- 2008 123 527

## Description

### FIELD OF THE INVENTION

The present invention relates to telecommunications and especially to a method for optimizing use of communication resources in packet data transmissions of a communication system.

### BACKGROUND ART

In packet-switched communications logical streams of data, hereinafter called as data streams, are transmitted as a stream of addressed packets. The packets may be forwarded by network nodes in a first-come first-serve fashion, or forwarded according to some scheduling discipline for fair queuing or differentiated and/or guaranteed quality of service. Examples of systems providing packet switched communications comprise the Internet, local area networks, and advanced cellular communications networks.

A communication resource refers herein to any facility of a communications system applicable to perform an operation or task. A communication resource may thus be a transmission resource, a memory resource, a processor resource, for example. Before a communication device that uses shared communication resources can access packet data services, it has to go through a packet data registration procedure, which involves the negotiation of a packet data protocol address and other parameters to be used during data transfer, and associating the packet data protocol address to a subscriber identity of the communication device. As a result of the procedure, a context is created, and the communication device may at any time activate a link within the context and transfer data packets via the link. When the link is active, it occupies various communication resources within the communications system. When the link it de-activated, many of these communication resources are released, and may be occupied for other purposes.

Conventionally the registration procedure is also used to negotiate a link period that applies to the activated link and defines an interval during which the communication device waits for a new incoming or outgoing data packet, without de-activating the link to release the associated communication resources. If this link period is exceeded, the link will be de-activated and needs to be activated again when new data packets arrive. It is clear that such timing is necessary to ensure that the communication resources reserved for the active link are efficiently used and made available to other links whenever possible. In this view it might seem advisable to minimise the link period.

On the other hand, if the link period is much shorter than the average interval during successive data packets, the link gets de-activated practically between each packet. Activation of a link requires exchange of signalling messages and processing in the elements, which is laborious and adds load to the signalling channels. In this end the advantage from quickly released and re-usable resources would thus easily be lost in the delays and other complications arising from the added signalling and processing.

Typically a communication device uses various applications that generate very different types of traffic. On the other hand, , the duration of one context is typically relatively long, so data streams of these applications are often activated within one and same link. This means that one link period negotiated during the context setup applies to all transmissions of all data streams, as long as the link is active. It is, however, very likely that for some transmissions the negotiated link period is too long and resources are wasted by keeping the link active even if there is no data to transmit. On the other hand, for some transmissions the negotiated link period is too short and a lot of resources are wasted on repetitive activations and de-activations of the link.

Document EP1139613 discloses a subscriber terminal that comprises a transmission detector including an active period detector for monitoring the inter-arrival time of data packets and for determining as an active period the period from a first data packet to a last data packet for which each monitored inter-arrival time falls in a predetermined range. The subscriber terminal also comprises a physical connection controller for maintaining the physical connection to the network side in the active period.

### SUMMARY

The invention is defined by claims 1-3, 9, 11, 14 and 15.

An object of the present invention is thus to provide a method and a device for implementing the method so as to alleviate the above problem in packet data transmissions. The object of the invention is achieved by a method, a communication device and a computer program product, which are characterized by what is stated in the independent claims. The preferred embodiments of the invention are disclosed in the dependent claims.

The invention is based on monitoring properties of data streams delivered or to be delivered over a communication link and adjusting the period the communication device that has an active link waits for a new incoming or outgoing data packet, without de-activating the link.

The invention allows efficient use of communication resources during packet data transmissions of a variety of applications. The embodiments of the invention provide further advantages that are discussed in the respective parts of their detailed description.

### BRIEF DESCRIPTION OF THE DRAWINGS

In the following, embodiments will be described in greater detail with reference to accompanying drawings, in which
Figure 1 illustrates protocol stacks in an exemplary packet data mechanism;
Figure 2 illustrates interconnections in an embodiment of a packet data network according to the invention;
Figure 3 illustrates transmission and signalling planes in the exemplary packet data mechanism;
Figure 4 illustrates two communicating entities applying a data context;
Figure 5 illustrates a signalling sequence between the communication entities of Figure 4 and a subscriber database;
Figure 6 illustrates operations in an embodiment of an device according to the invention;
Figure 7 illustrates operations for updating the link period;
Figure 8 illustrates logical elements in a device according to the invention.

### DETAILED DESCRIPTION OF SOME EMBODIMENTS

The present invention is applicable to elements in a communication system where a data stream between two endpoints is transmitted by means of addressed data packets. The communication system may be a fixed communication system or a wireless communication system or a communication system utilizing both fixed networks and wireless networks. The protocols, the specifications of communication systems and their elements, especially in wireless communication, develop rapidly. Such development may require extra changes to an embodiment. Therefore, all words and expressions should be interpreted broadly and they are intended to illustrate, not to restrict, the embodiment.

In the following, different embodiments will be described in a TETRA network using a GPRS type interconnection to other networks. It is, however, appreciated that the invention is not restricted to this particular communication technology or the specific terms related to it.

The following embodiments are exemplary implementations of the present invention. Although the specification may refer to "an", "one", or "some" embodiment(s), reference is not necessarily made to the same embodiment(s), and/or a feature does not apply to a single embodiment only. Single features of different embodiments of this specification may be combined to provide further embodiments.

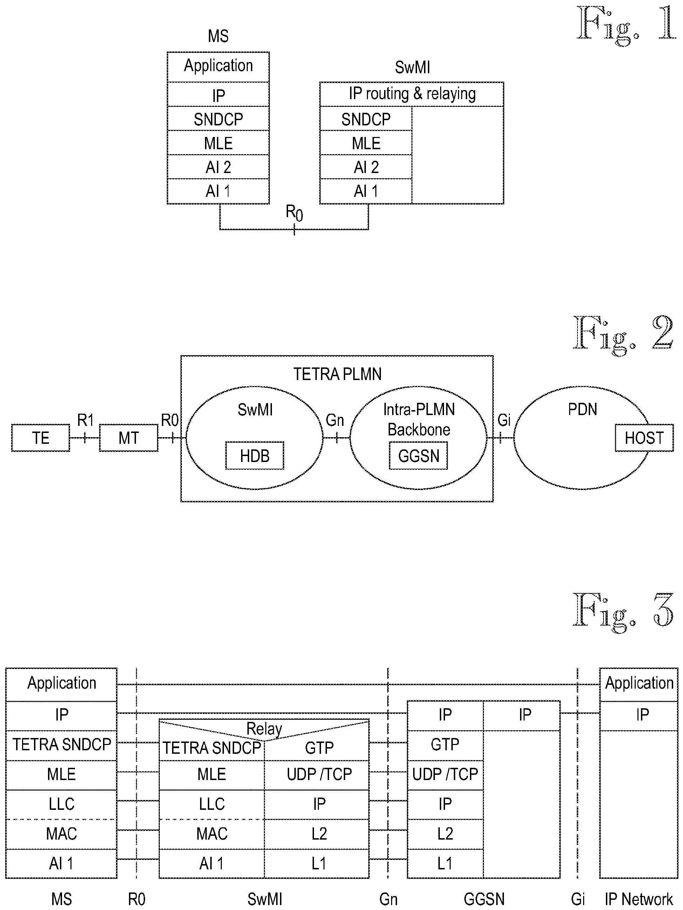

Referring to Figure 1, a basic TETRA network element is called a Switching and Management Infrastructure (SwMI). The SwMI includes all equipment and means, which enable users to communicate with each other via the TETRA network. The exact physical configuration of the SwMI is not, as such, relevant to the invention. Basically, the SwMI represents here any network infrastructure that provides the switching and management functions disclosed herein.

For example, a widely used TETRA network architecture comprises digital exchanges DXT to which the base stations TBS are connected. TETRA utilizes a distributed subscriber database structure so that there is a home database (HDB) which comprises permanent information about the individual and/or group subscribers in the subscriber's home network, and a visitor database (VDB) which comprises temporary information about individual and/or group subscribers visiting in the network. Typically each DXT is provided with a VDB. Some of the DXTs provide also a gateway to other telecommunications networks.

The SwMI communicates over an air interface RO with a TETRA mobile termination MT or a mobile station MS. The MT may be connected to a terminal equipment TE through an interface R1. TETRA subscriptions are identified by TETRA subscriber identities (TSI). Each MS or MT typically contains at least one family of TSIs. Each family contains one Individual TETRA Subscriber Identity (ITSI) and may also have one Alias TETRA Subscriber Identity (ATSI) and several Group TETRA Subscriber Identities (GTSI). The TSI family is valid for a home TETRA network.

In the exemplary communication system, a message to be delivered between two endpoints may be segmented into several smaller packets. Each packet is then labelled with its destination or connection identity and routed over the network according to the protocols applied in the network. Accordingly, in packet switched operations, a transmission channel needs to be occupied only for the duration of transmission of the packets.

Figure 1 thus illustrates the protocol stacks of the TETRA packet data when an application uses IP protocol and it is located in a mobile station MS. The MS may also be a combination of an IP packet mode Terminal Equipment (TE), such as a Personal Computer (PC), and a TETRA Mobile Termination (MT) having an IP packet data support. The protocol stacks in the MS and the SwMI typically contain the following protocols: the Subnetwork Dependent Convergence Protocol (SNDCP), Mobile Link Entity (MLE), Logical Link Control (LLC), Medium Access Control (MAC), and Air Interface Layer 1 (AI-1).

The air Interface layer 1 (AI-1) is defined in the TETRA specifications and provides a TETRA physical channel over the air interface RO. The MAC controls the access signalling (request and grant) procedures for the radio channel, and the mapping of the LLC frames onto the TETRA physical channel. Logical Link Control (LLC) layer provides a logical link between the MS and the SwMI. The MLE protocol discriminator entity (data transfer) routes TETRA packet data signalling and data to corresponding TETRA Packet data service access point (SAP) at the peer entity (SwMI/MS).

The TETRA packet data is built on top of the MLE layer of the basic TETRA protocol stack and provides service mechanisms to convey different higher layer protocols. The first protocol that is introduced merely for the packet data service is the SNDCP. The SNDCP is a TETRA-specific network layer protocol that has two main functions: 1) to negotiate and maintain TETRA PDP contexts between a MS and the SwMI, and 2) to control the PDP data transfer between the MS and the SwMI.

Before a MS can gain access to any SNDCP services, it firstly goes through a packet data registration procedure, called PDP Context Activation. The PDP Context Activation is typically initiated by the MS. The PDP Context Activation involves the negotiation of a PDP address (e.g. an IPv4 address) and other parameters to be used during data transfer, as well as the binding of a PDP address to a TETRA subscriber identity ITSI. A unique PDP context is established for each PDP address which is active on the network (i.e. ready to transmit or receive data). In addition to the PDP address and the ITSI, the PDP context includes also the SNDCP service access point identifier (SN-SAP), or more generally NSAPI (Network Service Access Point Identifier) through which the services of the SNDCP are available to the upper layer protocols. Two TETRA PDP contexts stored in the MS and the SwMI establish a logical connection therebetween.

A basic TETRA network may be interconnected to other packet data networks (PDN) or external hosts, or other communications networks, by means of a Gn interface and a GPRS gateway support node (GGSN) of the General Packet Radio Service (GPRS). Figure 2 illustrates interconnections in an embodiment of a packet data network according to the invention.

The main functions of SwMI in Figure 2 include the standard functions of the TETRA SwMI, namely the network access control, the mobility management, the radio resource management, the base station functions and the HDB/VDB functions, as well as the functionality which provides the Gn interface for the GGSN. The GGSN, on the other hand, provides the interworking with external IP networks, such as the IP address allocation, the IP routing, the IP user authentication, the IP tunnelling and the IP encryption.

The legends in the Figure 2 have the following meanings:
*TETRA PLMN*: The TETRA network, which is a combination of a TETRA SwMI and an Intra-PLMN Backbone.
*SwMI*: a TETRA Switching and Management Infrastructure.
*HDB:* a data base which comprises information about the individual and/or group subscribers and is located in the subscriber's home SwMI.
*GGSN*: a Gateway GPRS Support Node.
*Intra-PLMN Backbone*: a private IP network interconnecting IP network nodes, such as the GGSN.
*PDN*: an IP Packet Data Network, such as the Internet or a private intranet.
*Host*: an IP host computer, such as an e-mail server or an ordinary PC.
*R1*: the TETRA reference point between the packet mode TE and the MT.
*R0*: the reference point at the TETRA air interface for IP packet data.
*Gn, here:* the reference point between the SwMI and the GGSN within the same TETRA PLMN.
*Gi, here:* the reference point between an Intra-PLMN Bacbone and an external IP PDN.

Figure 3 illustrates the transmission and signalling planes of the TETRA PDP with the GGSN. The protocol structure is a combination of transmission planes described in TETRA and GPRS specifications, well known to a person skilled in the art. The connection is done by a relay function in the SwMI, which relays PDP PDUs between the R0 and Gn interfaces.

The TETRA protocol stacks were described above with reference to Figure 1. In the Gn interface the GPRS Tunnelling Protocol (GTP) tunnels the user data and the signalling messages between the SwMI and the GGSN. The User Datagram Protocol (UDP) and the Transmission Control Protocol (TCP) are alternative protocols, which can be used with the underlying IP layer to transfer GTP signalling between the SwMI and the GGSN. Layer 1 (L1) and Layer 2 (L2) are physical and data link layers at the bottom of the protocol stack.

After the PD context has been activated and the QoS negotiated, the MS and SwMI may at any time start the actual data transfer. The actual data transfer takes place over an active link, typically implemented via an assigned channel. A channel here refers to a transmission resource between at least two communicating endpoints. An assignable channel refers to an explicitly or implicitly identifiable transmission resource that may be exclusively associated to a sequence of one or more transmission events between defined communicating endpoints and released for association to another sequence of transmission events. Accordingly, as assigned channel refers here to an identifiable transmission resource, which is associated with a defined group of two or more communicating endpoints. Over an assigned channel, the communicating endpoints may have an active link and transmit data according to the protocols applying to that assigned channel. In order to save the transmission resources, the link is de-activated and the channel is released as soon as it is no longer needed, and the endpoints start communicating via a non-assigned channel.

It is noted that the assigned channel is used here merely as an example of a communication resources that are used by an active link. For example, an active link for packet data transmission may be implemented also via a non-assigned channel where links share the same transmission resource. In such a case, de-activation of the link naturally does not release the channel, but alleviates the load on the shared transmission resource. Furthermore, an active link may apply also other types of communication resources. For exampie, in the present TETRA example, a TETRA base station needs to maintain information on active links of subscribers in its cell. This information uses memory resources, which in large scale systems may be considerable, and should be used very cautiously. De-activation of an active link would thus release memory capacity for other use.

Accordingly, activation and de-activation of an active link may have an impact via one or more communication resources. For example, even if an active link would not use an exclusive transmission resource and would presently not load the shared transmission .resource by transmitting data packets, it would still use communication resources, at least in the form of the memory resources of the base station.

Continuing with the example, in TETRA, a non-assignable channel is typically a common control channel. During operations, a mobile station monitors a common control channel of a base station and through that exchanges messages needed for essential operations of the system, like registering to the system, assigning channels for voice calls or for packet data transfer, or paging of the mobile station for incoming voice calls or packet data traffic. On the other hand, PDP data transfer normally takes place over an assigned secondary control channel (assigned SCCH), termed here a Packet Data CHannel (PDCH).

The protocol for SNDCP is described in terms of a state machine. There are three main states which are defined for both the MS and SwMI, namely READY, STANDBY and IDLE. READY state typically implies that a MS is located on a PDCH and is currently engaged in data transfer or has recently (defined by a timer) been engaged in packet data transfer. STANDBY state implies a MS is no longer on a PDCH i.e. the MS has not recently (defined by a timer) been engaged in data transfer. IDLE state implies that a MS has no PDP contexts activated.

The duration of the actual data transfer in TETRA is thus associated to a state transfer and is typically controlled by means of activity timers that are responsive to transmission events, i.e. received or transmitted packets. In TETRA such activity timer is provided by a READY timer function that maintains a READY timer in MS and SwMI. For a data stream that forms one data transfer event, the READY timer thus measures a time between a delivery of one piece of information and a subsequent piece of information transmitted via the active link For example, when SwMI wishes to transmit packet data to a mobile station, the SwMI assigns the mobile station to a suitable PDCH. The SwMI SNDCP sends SN-DATA TRANSMIT REQUEST PDU that indicates the channel assigned to the mobile station. When sending the first SN-DATA PDU, SwMI restarts a READY timer that is thereafter reset every time a new SN-DATA PDU is sent to the mobile station. The READY timer is also used to deactivate the link when the time between a delivery of one piece of information and a subsequent piece of information transmitted via the active link exceeds a defined link period. When the READY timer expires in the SwMI SNDCP, it issues SN-END OF DATA PDU, including a new channel allocation to a common control channel, and enters a standby state. Correspondingly, the mobile station SNDCP receives SN-END OF DATA PDU, stops its READY timer, starts a STANDBY timer and enters standby state on the indicated common control channel.

Conventionally the link period of the READY timer is defined at PDP context activation of a mobile station and is thus valid for all data transfers performed via that PDP context. However, data traffic of the station may vary considerably, depending on the amount and rate of the data packets input and output by the various system and user applications applying the context. If the READY timer link period and the type of data traffic do not match, channel capacity of the system is not used optimally. Either channel capacity is wasted in prolonged waiting for packets or in repeated activations of assigned channels.

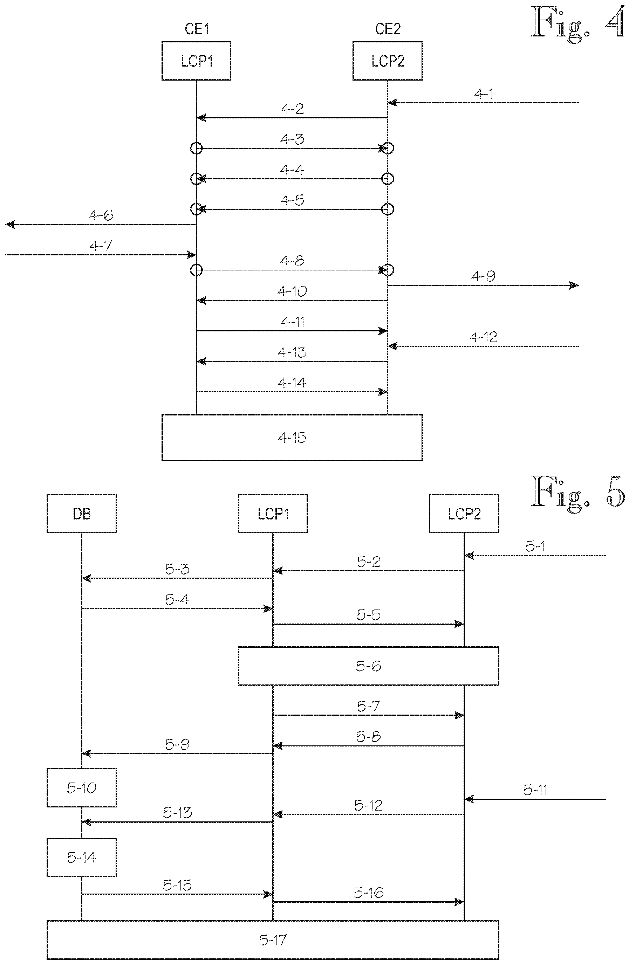

The signalling chart of Figure 4 illustrates these problems first in a more generic context by means of two communicating entities CE1, CE2. The communicating entities apply mutually compatible link control protocols that manage delivery of data messages in separate data segments over a communication link. The signalling chart illustrates operations from the point of view of respective link control protocol entities in the two communicating entities, and are denoted as LCP1 and LCP2. The link control protocol defines a link period P1 that applies to the communication link and defines a time for maintaining the link active after a detected delivery of a data segment. If this link period P1 is exceeded before a new segment is available for transmission, the active link is deactivated.

In the beginning there is no available communication link between LCP1 and LCP2. When a data request arrives (4-1) to LCP2, LCP2 initiates establishment of the link by sending a link activation request (4-2) to LCP1. For a person skilled in the art it is clear that link establishment may comprise exchange of more messages between LCP1 and LCP2. For conciseness, the steps/points, signalling messages and related functions described in any of the figures of this application are in no absolute chronological order, and some of the steps/points may be performed simultaneously or in an order differing from the given one. Other functions can also be executed between the steps/points or within the steps/points and other signalling messages sent between the illustrated messages. Some of the steps/points or part of the steps/points can also be left out or replaced by a corresponding step/point or part of the step/point. The signalling messages are only exemplary and may even comprise several separate messages for transmitting the same information. In addition, the messages may also contain other information.

In the end of the link establishment LCP1 sends to LCP2 a link activation response (4-3) and starts an activity timer that expires at P1. The activity timer starts are denoted in Figure 4 by circles in the starting end of the transmitted messages. Reception of the link activation response (4-2) starts the activity timer for P1 also in LCP2. Every time a data segment of the data request (4-1) is transmitted (4-4 and 4-5) from LCP2, the activity timer is restarted. Correspondingly, every time a data segment is received to LCP1 from LCP2, the activity timer is restarted. Data segments of the data request (4-1) are compiled in LCP1 into data indication (4-6) and fed for further processing in the communication entity CE1 of LCP1. After the last transmitted data segment (4-5) the activity timer runs in both ends and the link is available for further transmissions. Accordingly, when the internal processes of CE1 submit a second data request (4-7) to LCP1 before its activity timer has expired at P1, the associated one or more data segments (4-8) may be delivered to LCP2 via the link without further signalling. Again, transmission of a data segment restarts the activity timers in the transmitting and in the receiving end, and the one or more data segments of the second data request are compiled in LCP2 into a second data indication (4-9) and fed for further processing in the communication entity CE2 of LCP2.

After the last transmitted data segment (4-8) of the second data request the activity timer runs in both ends and the link is available for further transmissions. However, after P1 the activity timer expires, and LCP2 sends to LCP1 a link deactivation request (4-10) and LCP1 acknowledges (4-11) after which the communication resource used by the link is released for other link activations. Thus when a third data request, potentially generated in response to the second data request, arrives (4-12) to LCP2, there is no communication link available for transmissions. LCP2 and LCP1 need first again go through link establishment procedures (4-13 to 4-14) before they can start transmission (4-15) of data segments of the third data request.

The part of operations presented in Figure 4 show the ambiguity between the length of the link period P1 and usage of communication resources by that link. As long as the link is active, it uses communication resources; for example the transmission resources of the channel it uses are not available for other communications. Therefore it would be important to keep the link period P1 of the activity timer as short as possible such that the resources are always quickly released for use in other purposes. On the other hand, if the link period P1 is too short, the link gets deactivated too early and its re-establishment requires extra signalling, which unnecessarily wastes time and resources. If all three data requests described above are part of a communication procedure of a particular application, continuous re-establishments may also cause unacceptable delay to the overall procedure.

For example, in the TETRA configuration of Figures 1 to 3, the link period negotiated for the PDP context is applied via READY timer in any data transmissions via it. It is clear that any assigned channels should be released for other uses and users as soon as possible, so the link period applied to the READY timer should be as short as possible. On the other hand, if the link period applied to the READY timer is too short, for example shorter than a period between successive interactive communications between two applications, the endpoints need to go through the channel assignment procedure every time a new message is to be delivered. This causes much additional processing to both endpoints. Furthermore, the channel assignment procedure incurs additional load to the common control channel, which is not acceptable.

In embodiments of the present invention problems arising from this ambiguity are solved by monitoring one or more defined properties of data streams delivered or to be delivered via a link. On the basis of these properties one or more stream values are generated such that the time for maintaining the link active after a delivered data segment may be adjusted according to these stream values. A stream value is a variable that changes according to a rate of data packets of a data stream and may be determined from one or more characteristics of the data stream. The rate of data packets of the data stream refers to the frequency of transmitted packets that belong to the same data stream, i.e. indicates how often the data packets travel via the link. The stream value may be determined from a data stream transmitted through the link, from a data stream ready to be transmitted next through the link, or from a data stream expected to be transmitted through the link after a defined procedure or after a defined time interval. In the following, one example of monitored properties, stream values and adjustments is described in more detail with generic procedures applicable, for instance to embodiments described in Figures 1 to 4. Some other exemplary applications are discussed later on in the specification. As described above, in the exemplary TETRA system, the activity timer of Figure 5 corresponds to the READY timer, the link period corresponds to the timer period applied for the READY timer, and communication entities CE1 and CE2 correspond with a TETRA mobile station and network node, here the DXT of the TETRA network.

Figure 5 illustrates a signalling sequence between the communication entities CE1 and CE2 of Figure 4 and a subscriber database DB used for storing link-related information. The database DB is a logical entity that represents here one or more separate database instances, and/or an entity integrated to at least one of the communication entities CE1, CE2, accessible to CE1. In this example, LCP1 is a network link control protocol of CE1 and LCP2 is a corresponding terminal link control protocol of CE2. In the exemplary solution of Figure 5, the defined property monitored for the adjustment is the length of the interval between subsequent transmissions, and the monitoring is performed in the network entity CE1. The monitoring results are, however, forwarded to the subscriber database, where link period applied to the activity timer P1 is stored and new link periods for the activity timer P1 are determined. This divided configuration is advantageous, because storing of subscriber-related data for the new operations is performed in the element that is designed for storing subscriber-related information, whereas the link control protocol may remain very generic. However, some other share of responsibilities between separate entities may be applied without deviating from the scope of protection. For example, both the monitoring and the determining functions may be performed in the link control protocol.

In its simplest form the procedure may be implemented with one stream value only. In the present embodiment, the selected property is monitored by means of two stream values. The first stream value indicates whether the interval between successive data packets is substantially constant or not, and if it is constant it also indicates the length of the constant interval. The second stream value varies according to how compatible the lengths of the intervals between successive data packets are with the presently applied link period. The adjustment is done by computing a new link period for the activity timer by means of an algorithm applying both these stream values. Basically the more stream values are used, the more basis there are for the subsequent adjustment algorithms. However, the monitoring task should not be made too heavy.

As in Figure 4, when a data request arrives (5-1) to LCP2, LCP2 initiates establishment of the link by sending a link activation request (5-2) to LCP1. Even in conventional procedures, a link activation request typically triggers a request for some link parameters, like QoS and traffic class, from LCP2 to the subscriber database DB. When DB replies by providing the requested parameters (5-3), it also includes the link period for the activity timer. However, instead of applying a constant link period negotiated at PDP context setup, the subscriber database stores in this embodiment a dynamically varying link period computed on the basis of data streams transmitted previously over the same PDP context. Thus, the response from DB comprises an updated link period t1 to be applied for the activity timer, and LCP1 takes this link period t1 into use. LCP1 passes t1 also on to LCP2 with the link activation response (5-5).

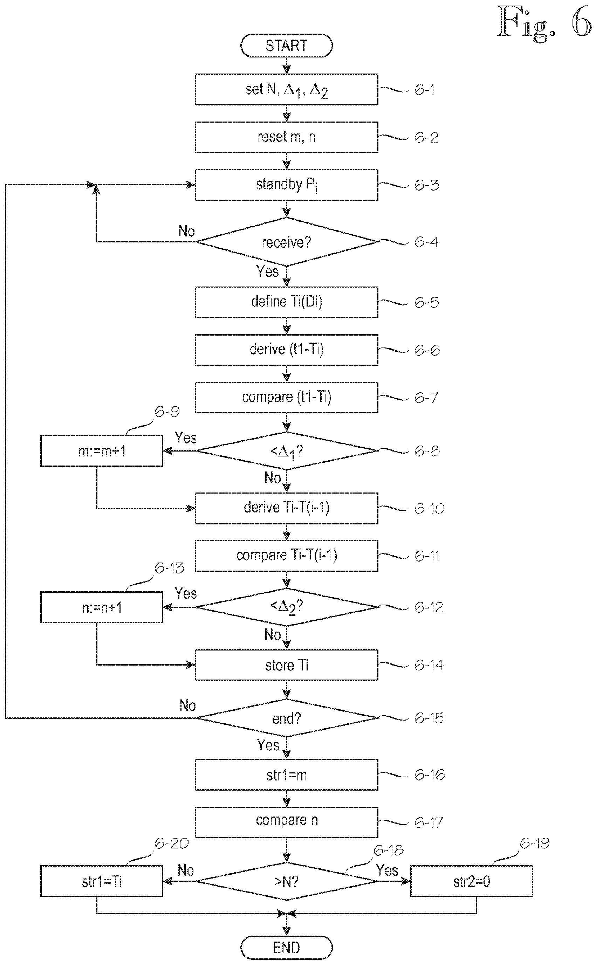

Step (5-6) represents a sequence of data packets that are exchanged between LCP1 and LCP2 within an interval during which data packets are exchanged with such activity level that the activity timer does not expire in either end. During that sequence LCP1 monitors the data streams, especially the intervals between the exchanged data packets, and collects thereby information for stream values str1 and str2. These operations in LCP1 are described in more detail in the flow chart of Figure 6.

The procedure of Figure 6 starts when CE1 is switched on, a PDP context is established between CE1 and CE2, the link is activated and LCP1 is ready to receive a first data packet from LCP2. LCP1 is initially configured (6-1) with a set of threshold values N, Δ₁, Δ₂. The threshold Δ₁ represents a limit that may be used for testing whether a detected interval between data packets is close to the applied link period, i.e. it shows whether the activity timer 'almost' expired or not. The threshold Δ₂ represents a limit for testing deviations between lengths of intervals of successive data packets, and N is a corresponding threshold for testing whether these determined deviations are small enough to make an interpretation that the interval between data packets is constant. Use of these thresholds will be described in the following.

LCP1 comprises also two counters m and n that are first reset (6-2) and then LCP1 becomes standby (6-3) to exchange data packets with LCP2. As long as a data packet is not transmitted or received (6-4) LCP1 remains standby for new data packets. Whenever a data packet is transmitted or received, LCP1 determines (6-5) the interval Ti from the transmittal or reception of a previous data packet to the reception or transmittal of the present data packet. Then LCP1 determines (6-6) the difference between the length of the applied link period t1 and the detected interval Ti and compares (6-7) the difference (t1-Ti) with Δ₁. The threshold Δ1 is typically adjusted such that if (6-8) the difference between the interval Ti and the link period t1 is smaller than Δ₁, it means that the link period may be considered to have been very close to expiring before the new data packet was detected. If this is the case, the first closeness counter m is incremented (6-9). Otherwise LCP1 moves to determine (6-10) the difference between an earlier interval T(i-1) and the present interval Ti and compares (6-11) their difference with Δ₂. The threshold Δ₂ is also adjusted such that if (6-12) the difference between the previous interval T(i-1) and the present interval Ti is smaller than Δ₂, it means that the intervals may be considered to be very close to each other, i.e. represent average value for the interval between data packets. In such case the second closeness counter n may be incremented (6-13). Otherwise LCP1 moves directly to store (6-14) the length of the present interval Ti as the earlier interval T(i-1). It is noted that in order to allow comparisons of incremented closeness counter values to predefined values, closeness counters n and m may also be maintained as closeness rate counters. This may be implemented, for example, by first incrementing the closeness counter and then determining a ratio between the closeness counter value and the total number of compared intervals. N may then be defined as a rate value that is not dependent on the varying number of compared intervals in step 5-6.

At this point LCP1 checks whether the delivery of data packet ends and the link is deactivated (6-15). If not, it returns to step 6-3 to receive new data packets. Otherwise, a first stream value str1 is determined (6-16) on the basis of the value of counter m. Advantageously str1 is set to equal m.

In order to determine whether successive intervals may be considered constant, the value of the closeness counter n is compared (6-17) with N. If (6-18) the detected number of deviations that are bigger than Δ₂ in the group of monitored intervals is greater than N, the interval cannot be considered constant and the second stream value str2 is set (6-19) to zero. If the number of detected deviations bigger than Δ₂ is smaller than N, the interval can be considered constant and the second stream value str2 is set (6-19) to equal any stored value of the interval, advantageously the most recently detected Ti. It is clear that the thresholds and comparisons described here are simplified mechanisms used to illustrate the principles of the proposed mechanism. More complex methods may be generated and applied to more accurately monitor and analyse properties of the data streams without deviating from the scope of protection.

Returning back to Figure 5, when the interval between two successive data packets exceeds t1, the activity timer expires and LCP1 sends (5-7) to LCP2 a link deactivation request. LCP2 acknowledges the request by sending a link deactivation response (5-8). After the link is deactivated, LCP1 sends (5-9) to DB a link tear down indication that comprises the determined stream values str1, str2 and information indicating the time Tstop when the link was deactivated.

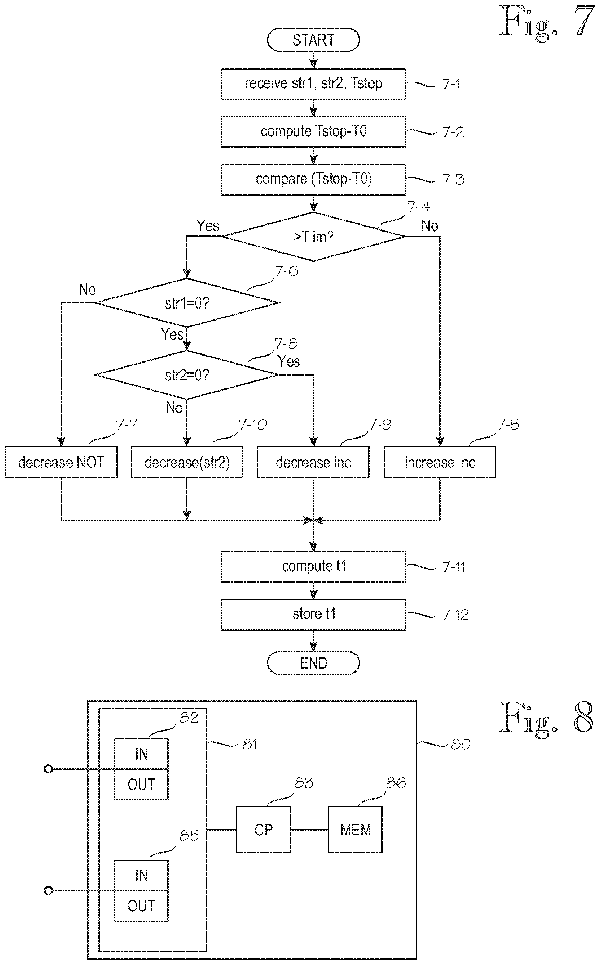

Step 5-10 represents a procedure for storing the values str1, str2 and Tstop in DB. When a new data request (5-11) in LCP2 triggers a new link activation request (5-12) from LCP2 to LCP1, LCP1 again queries (5-13) link parameters from DB. Before forwarding the link period applied recently, DB updates (5-14) the link period t1. An example for this update procedure is described in more detail with Figure 7.

The procedure of Figure 7 starts when DB is operative and the link is active between LCP1 and LCP2. When DB receives (7-1) the stream values and the deactivation time, it retrieves T0 that stores information indicating the previous time the link was deactivated. DB counts (7-3) the interval between Tstop and T0 and compares their difference to a predefined time limit Tlim. Tlim represents an average link period that typically encompasses a number of intervals between successive transmissions. If (7-4) Tlim is not exceeded, it may well be assumed that the link period is not long enough to eliminate unnecessary link activations after practically each transmission. In such a case the link period may be increased (7-5). Increase may be done, for example, incrementally. On the other hand, if (7-4) Tlim is exceeded, it is known that the link period is at least long enough, and the stream values may be used to check whether and how the link period t1 should be decreased.

For example, it may be first checked (7-6) whether the first stream value str1 is very small, i.e. whether it should be decreased or not. Such determination would indicate that during previous link activation, the intervals between data packets have been much shorter that the link period, and the activity timer has not been close to expire or has almost expired only a very few times (less than a predefined limit value). In this example a predefined limit value used for comparison is zero, i.e. if the activity timer has almost expired at least once, decrease of the link period t1 is not deemed (7-7) necessary. Otherwise DB moves to check further whether the second stream value str2 is equal to zero or not. If str2 equals to zero, the intervals between the data packets are not constant and they cannot be used as a basis for determining new link periods for the activity timer. In such a case, some other approach, for example a predefined incremental decrease (7-9) may be applied. On the other hand, if str2 is not zero, it is known to store the length of the constant interval, so str2 is selected (7-10) to be used to compute the new link period value. When the type of change is known via steps 7-5 to 7-10, the new link period t1 is computed (7-11) and stored (7-12) in DB.

It is noted that the new link period value is recalculated with all due consideration and even if the decision chain of steps 7-6 and 7-8 would indicate that the link period is too long, the result of step 7-10 may be increase or decrease of the link period, depending on the design principles. For example, if the constant interval is, for instance 300 seconds, the link period could be adjusted to a value well over 300 seconds to maintain the link continuously. Alternatively, the link period value could be deliberately set to be really small, say 3 seconds. In practise, if the link has activity approximately once in every 5 minutes, there is actually not sense to reserve the resources for the link for such a long inactive time between transmitted data packets. In this case the cost of the generated extra signalling load would be far less than the cost of unnecessarily allocated resources. This is to highlight that the stream values are thus preferably used to represent various properties of data streams, the determinations made upon them may vary considerably from application to application.

Returning again to Figure 5, DB provides (5-15) the updated link period value (T₀) to LCP1, which takes it into use and forwards it also to LCP2, in a manner described above in steps 5-4 and 5-5. The transmissions (5-17) may then be started again, as described above in steps 5-6. Steps 5-7 to 5-16 and step 5-17 may be repeated until the PDP context is closed. Due to the presented arrangement, link period values in both endpoints may be adjusted dynamically to match with the exchanged data streams. This optimises the use of the channel resources and reduces signalling load required to control transmissions of a group of varying data streams.

In the described example, the adjustment was based on properties of the data stream previously transmitted via the link. Such history values are advantageous to use, because the information is immediately available for monitoring and calculations and they allow, when necessary, very accurate computations using extensive history data information accumulated to the elements. It is noted that history data of other properties of the data streams may be applied, as well. The stream values and corresponding adjustments may alternatively depend on, for example, monitored delays between the IP packets. The average, lowest and highest delays between IP packets provide a computational basis for a variety of analyses on the IP packet data stream, easily conceivable to a person skilled in the art.

However, as described above, the analysis does not necessarily need to rely on history data; also other properties of the data stream may be applied to estimate the need for adjustment of the activity timer. Various properties may also be applied in combination.

For example, IP address of the originating party or of the receiving party may be applied in the decision. Typically the traffic of an application server is relatively consistent, so the type of the data stream may be relatively well estimated merely by knowing that the application server is one of the communicating endpoints. Thus, LCP1, or DB accessible to LCP1 may comprise information that associates a defined IP address of the application server with a defined link period. This link period may then be called to apply to any communications where the other endpoint is the application server.

Similarly, data transmissions of a subscriber may be relatively well known in advance. For example, in case the user is part of an organization that mostly exchanges short data messages at defined intervals, LCP1, or DB accessible to LCP1 may comprise information that associates a defined subscriber address with a defined link period value. This link period value may then be applied to any communications where the other endpoint is the subscriber.

Also LCP1 may be configured to identify the quality of service (QoS) requested by an application using the link or QoS granted to the application by the system. Generally, a particular QoS typically associates to a particular type of data stream. This means that different link period values may be associated to different QoS values. Whenever a link is activated with those particular requested or granted QoS values, the link period corresponding with that QoS value may be taken into use.

Figure 8 is a block diagram of a communication device 80 applicable in embodiments of the invention. The communication device 80 comprises a communication unit 81 with at least one input unit for inputting data to the internal processes of the device and at least one output unit for outputting data from the internal processes of the device.

The transceiver 82 in a communication unit 81 of a communication device typically comprises plug-in units acting as an input gateway for information delivered to its external connection points and as an output gateway for information fed to the lines connected to its external connection points. A communication unit 81 often comprise also a user interface 85 with a keypad, a touch screen, a microphone, or equals for inputting data from the user and a screen, a touch screen, a loudspeaker, or equals for outputting data to the user.

The communication unit 81 is electrically connected to a processing unit 83 for performing systematic execution of operations upon data. The processing unit 83 is a central element that essentially comprises an arithmetic logic unit, a number of special registers and control circuits. A memory unit 86, data medium where computer-readable data or programs, or user data can be stored, is typically integrated or connected to the processing unit 83. The memory unit 86 typically comprises volatile or non-volatile memory, for example EEPROM, ROM, PROM, RAM, DRAM, SRAM, firmware, programmable logic, etc.

The processing unit 83, memory unit 86, communication unit 81 and operational information element 86 are electrically interconnected to provide means for performing systematic execution of operations on the received and/or stored data according to the predefined, essentially programmed processes of the device. Typically executions of such processes are controlled by the processing unit. In solutions according to the invention, such operations of the communication device comprise functions performed by LCP1 entity in Figures 5 and 6, and/or functions performed by DB entity in Figures 5 and 7. More details for the operations may be referred from the exemplary embodiments in Figures 1 to 7.

The units and blocks of the device may be implemented as one or more integrated circuits, such as application-specific integrated circuits (ASIC). Other hardware embodiments are also, feasible, such as a circuit built of separate logic components. A hybrid of these different may also be applied. All modifications and configurations required for implementing functionality of an embodiment may be performed as routines, which may be implemented as added or updated software routines, application circuits (ASIC) and/or programmable circuits. Software routines may be downloaded into the device.

It should be noted that only elements necessary for disclosing the present embodiment are illustrated in Figure 8. For a person skilled in the art it is clear that user terminals comprise a plurality of further elements and functionalities not explicitly illustrated herein. In addition, the blocks illustrate logical or functional units that may be implemented in or with one or more physical units, notwithstanding whether they are illustrated as one or more blocks in Figure 9.

The computer programs may be stored on a computer program distribution medium readable by a computer or a processor. The computer program medium may be, for example but not limited to, an electric, magnetic, optical, infrared or semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

It will be obvious to a person skilled in the art that, as technology advances, the inventive concept can be implemented in various ways. The embodiments of the invention are not limited to the examples described above but may vary within the scope of the claims.

## Claims

1. A method comprising:
activating (5-2), by a communication device, a link for transmissions of a data stream between the communication device and a second communication device;
determining, by the communication device, during the link activation a length of a link period to be used for the data stream;
transmitting (5-6) one or more pieces of the data stream between the communication device and the second communication device through the link;
measuring, by the communication device, a time between transmissions of one piece of the data stream and a subsequent piece of the data stream transmitted through the link;
de-activating (5-7), by the communication device, the link in response to the first one of the measured time exceeding the determined length of the link period and receiving from the second communication device a de-activation request;
determining (5-6), by the communication device, from the data stream one or more values for one or more predetermined properties of the data stream;
using (5-14), by the communication device, the one or more values to update the length of the link period.

2. A method comprising:
activating (5-2), by a communication device, a link between the communication device and a second communication device for transmitting a data stream;
requesting (5-3), by the communication device, during the link activation, link parameters from a third device;
receiving (5-4), by the communication device, from the third device a response including a length of a link period to be used for the data stream;
transmitting (5-6) one or more pieces of the data stream between the communication device and the second communication device through the link;
measuring, by the communication device, a time between transmissions of one piece of the data stream and a subsequent piece of the data stream transmitted through the link;
de-activating (5-7), by the communication device, the link in response to the first one of the measured time exceeding the received length of the link period and receiving from the second communication device a de-activation request;
determining (5-6), by the communication device, from the data stream one or more values for one or more predetermined properties of the data stream;
sending (5-9), by the communication device, after the link de-activation, the one or more values to the third device to update the length of the link period.

3. A method comprising:
receiving (5-3, 5-13), in a device comprising a subscriber database, from a communication device, a request for link parameters for a data stream between the communication device and a second communication device;
retrieving, by the device, from the subscriber database, a length of a link period to be used for the data stream;
sending (5-4, 5-15), by the device, a response to the request to the communication device, the response including the retrieved length of the link period;
receiving (5-9), by the device, from the communication device, one or more values for one or more predetermined properties of the data stream; and
using (5-14), by the device, the one or more values to update the length of the link period in the subscriber database.

4. A method according to claim 1, 2 or 3, wherein the one or more values include stream values changing according to the rate of data packets in the data stream.

5. A method according to claim 1, 2, 3 or 4, wherein a value of the one or more values is determined from the data stream when it is transmitted through the link, or when the data stream is ready to be transmitted next from the communication device to the second communication device through the link, or when the data stream is expecting to be transmitted from the communication device to the second communication device through the link after a defined procedure or a defined time interval.

6. A method according to claim 5, wherein one of the one or more predetermined properties of the data stream is a length of an interval between subsequent data packets in the data stream, an identity of one of the two communication devices, an address of one of the communication devices, or subscriber data associated to the identity of one of the communication devices.

7. A method according to any of the preceding claims 1-6, further comprising applying in the updating a first closeness counter that indicates how often the difference between the time between a transmission of one piece and a subsequent piece of the data stream, and the time for de-activating the link was smaller than a predefined threshold value.

8. A method according to any of the preceding claims 1-6, further comprising:
computing from a data stream a stream value (str2) that indicates an average interval between successive data packets; and
updating the length of the link period according to the computed stream value.

9. A communication device (80; LCP1), comprising:
means for activating a link for transmission of a data stream between the communication device and a second communication device;
means for determining a length of a link period to be used for the data stream;
means for one or more transmissions of pieces of the data stream between the communication device and the second communication device through the link;
means for measuring a time between a transmission of one piece of the data stream and a subsequent piece of the data stream transmitted through the link;
means for de-activating the link, the means for de-activating being responsive to the measured time exceeding the length of the link period and a reception of a de-activation request from the second communication device; and
means for determining from the data stream one or more values for one or more predetermined properties of the data stream; and
means for using the one or more values to update the length of the link period for the next time the link is activated.

10. A communication device according to claim 9, wherein the means for updating are adapted to compute an updated length of the link period from the one or more values (str1, str2).

11. A communication device (80; LCP1), comprising:
means for activating a link for transmission of a data stream between the communication device and a second communication device;
means for requesting during the link activation link parameters from a third device;
means for receiving from the third device a response including a length of a link period to be used for the data stream;
means for one or more transmissions of pieces of the data stream between the communication device and the second communication device through the link;
means for measuring a time between a transmission of one piece of the data stream and a subsequent piece of the data stream transmitted through the link;
means for de-activating the link, the means for de-activating being responsive to the measured time exceeding the received length of the link period and a reception of a de-activation request from the second communication device;
means for determining from the data stream one or more values for one or more predetermined properties of the data stream; and
means for sending the one or more values to the third device to update the length of the link period.

12. A communication device according to claim 9, 10 or 11, wherein the means for determining the one or more values comprises a first counter for indicating how often the difference between the measured time between transmissions of one piece and a subsequent piece of the data stream and the length of the link period was smaller than a predefined threshold value; and a second counter for indicating how often the difference between two concecutive measured times was smaller than a further predefined threshold value.

13. A communication device according to claim 9, 10 or 11, wherein the means for determining the one or more values are configured to compute from the data stream a value (str2) that indicates an average interval between successive data pieces.

14. A device (80) comprising:
a subscriber database (DB):
means for storing, in the subscriber database, for a communication device at least a length of a link period (t1);
means for receiving from the communication device one or more values representing properties of a data stream;
means for using the one or more values to update the length of the link period for the communication device;
means for receiving from the communication device a query querying link parameters; and
means for sending the length of the link period for the communication device to the communication device in a response to the query.

15. A computer program comprising program code adapted to perform the steps of any of claims 1 to 8.

## Patentansprüche

1. Verfahren, das Folgendes umfasst:
Aktivieren (5-2), von einer Kommunikationsvorrichtung, einer Verbindung für Übertragungen eines Datenstroms zwischen der Kommunikationsvorrichtung und einer zweiten Kommunikationsvorrichtung;
Bestimmen, von der Kommunikationsvorrichtung, einer Länge einer Verbindungsperiode, die für den Datenstrom verwendet werden soll, während der Verbindungsaktivierung;
Übertragen (5-6) eines oder mehrerer Teile des Datenstroms zwischen der Kommunikationsvorrichtung und der zweiten Kommunikationsvorrichtung durch die Verbindung;
Messen, von der Kommunikationsvorrichtung, einer Zeit zwischen Übertragungen eines Teils des Datenstroms und eines nachfolgenden Teils des Datenstroms, der durch die Verbindung übertragen wird;
Deaktivieren (5-7), von der Kommunikationsvorrichtung, der Verbindung als Antwort darauf, dass die erste der gemessenen Zeit die bestimmte Länge der Verbindungsperiode überschreitet, und dass einer Deaktivierungsanfrage von der zweiten Kommunikationsvorrichtung Empfangen wird;
Bestimmen (5-6), von der Kommunikationsvorrichtung, eines oder mehrerer Werte aus dem Datenstrom für eine oder mehrere vorbestimmte Eigenschaften des Datenstroms;
Verwenden (5-14), von der Kommunikationsvorrichtung, des einen oder der mehreren Werte, um die Länge der Verbindungsperiode zu aktualisieren.

2. Verfahren, das Folgendes umfasst:
Aktivieren (5-2), von einer Kommunikationsvorrichtung, einer Verbindung zwischen der Kommunikationsvorrichtung und einer zweiten Kommunikationsvorrichtung zum Übertragen eines Datenstroms;
Anfordern (5-3), von der Kommunikationsvorrichtung, von Verbindungsparametern von einer dritten Vorrichtung während der Verbindungsaktivierung;
Empfangen (5-4), von der Kommunikationsvorrichtung, einer Antwort, die eine Länge einer Verbindungsperiode aufweist, die für den Datenstrom verwendet werden soll, von der dritten Vorrichtung;
Übertragen (5-6) eines oder mehrerer Teile des Datenstroms zwischen der Kommunikationsvorrichtung und der zweiten Kommunikationsvorrichtung durch die Verbindung;
Messen, von der Kommunikationsvorrichtung, einer Zeit zwischen Übertragungen eines Teils des Datenstroms und eines nachfolgenden Teils des Datenstroms, der durch die Verbindung übertragen wird;
Deaktivieren (5-7), von der Kommunikationsvorrichtung, der Verbindung als Antwort darauf, dass die erste der gemessenen Zeit die empfangene Länge der Verbindungsperiode überschreitet, und dass einer Deaktivierungsanfrage von der zweiten Kommunikationsvorrichtung Empfangen wird;
Bestimmen (5-6), von der Kommunikationsvorrichtung, eines oder mehrerer Werte aus dem Datenstrom für eine oder mehrere vorbestimmte Eigenschaften des Datenstroms;
Senden (5-9), von der Kommunikationsvorrichtung, des einen oder der mehreren Werte an die dritte Vorrichtung nach der Verbindungsdeaktivierung, um die Länge der Verbindungsperiode zu aktualisieren.

3. Verfahren, das Folgendes umfasst:
Empfangen (5-3, 5-13), in einer Vorrichtung, die eine Teilnehmerdatenbank umfasst, von einer Kommunikationsvorrichtung, einer Anfrage nach Verbindungsparametern für einen Datenstrom zwischen der Kommunikationsvorrichtung und einer zweiten Kommunikationsvorrichtung;
Abrufen, von der Vorrichtung, aus der Teilnehmerdatenbank, einer Länge einer Verbindungsperiode, die für den Datenstrom verwendet werden soll;
Senden (5-4, 5-15), von der Vorrichtung, einer Antwort auf die Anfrage an die Kommunikationsvorrichtung, wobei die Antwort die abgerufene Länge der Verbindungsperiode aufweist;
Empfangen (5-9), von der Vorrichtung, von der Kommunikationsvorrichtung, eines oder mehrerer Werte für eine oder mehrere vorbestimmte Eigenschaften des Datenstroms; und
Verwenden (5-14), von der Vorrichtung, des einen oder der mehreren Werte, um die Länge der Verbindungsperiode in der Teilnehmerdatenbank zu aktualisieren.

4. Verfahren nach Anspruch 1, 2 oder 3, wobei der eine oder die mehreren Werte Stromwerte aufweisen, die sich gemäß der Rate von Datenpaketen in dem Datenstrom ändern.

5. Verfahren nach Anspruch 1, 2, 3 oder 4, wobei ein Wert des einen oder der mehreren Werte aus dem Datenstrom bestimmt wird, wenn er durch die Verbindung übertragen wird, oder wenn der Datenstrom bereit ist, als Nächstes von der Kommunikation an die zweite Kommunikationsvorrichtung durch die Verbindung übertragen zu werden, oder wenn der Datenstrom erwartet, von der Kommunikationsvorrichtung an die zweite Kommunikationsvorrichtung durch die Verbindung nach einem definierten Vorgehensweise oder einem definierten Zeitintervall übertragen zu werden.

6. Verfahren nach Anspruch 5, wobei eine der einen oder mehreren vorbestimmten Eigenschaften des Datenstroms eine Länge eines Intervalls zwischen nachfolgenden Datenpaketen in dem Datenstrom, eine Identität einer der zwei Kommunikationsvorrichtungen, eine Adresse einer der Kommunikationsvorrichtungen oder Teilnehmerdaten, die der Identität einer der Kommunikationsvorrichtungen zugeordnet sind.

7. Verfahren nach einem der vorstehenden Ansprüche 1-6, weiter umfassend das Anwenden bei der Aktualisierung eines ersten Nähenzählers, der angibt, wie oft die Differenz zwischen der Zeit zwischen einer Übertragung eines Teils und eines nachfolgenden Teils des Datenstroms und der Zeit zum Deaktivieren der Verbindung kleiner als ein vordefinierter Schwellenwert war.

8. Verfahren nach einem der vorstehenden Ansprüche 1-6, weiter umfassend:
Berechnen, aus einem Datenstrom, eines Stromwertes (str2), der ein mittleres Intervall zwischen aufeinanderfolgenden Datenpaketen angibt; und
Aktualisieren der Länge der Verbindungsperiode gemäß dem berechneten Stromwert.

9. Kommunikationsvorrichtung (80; LPC1), Folgendes umfassend:
Mittel zum Aktivieren einer Verbindung zur Übertragung eines Datenstroms zwischen der Kommunikationsvorrichtung und einer zweiten Kommunikationsvorrichtung;
Mittel zum Bestimmen einer Länge einer Verbindungsperiode, die für den Datenstrom verwendet werden soll;
Mittel für eine oder mehrere Übertragungen von Teilen des Datenstroms zwischen der Kommunikationsvorrichtung und der zweiten Kommunikationsvorrichtung durch die Verbindung;
Mittel zum Messen einer Zeit zwischen Übertragungen eines Teils des Datenstroms und eines nachfolgenden Teils des Datenstroms, der durch die Verbindung übertragen wird;
Mittel zum Deaktivieren der Verbindung, wobei die Mittel zum Deaktivieren auf die gemessene Zeit reagieren, die die Länge der Verbindungsperiode überschreitet, und auf einen Empfang einer Deaktivierungsanfrage von der zweiten Kommunikationsvorrichtung; und
Mittel zum Bestimmen, aus dem Datenstrom, eines oder mehrerer Werte für eine oder mehrere vorbestimmte Eigenschaften des Datenstroms; und
Mittel zum Verwenden des einen oder der mehreren Werte zum Aktualisieren der Länge der Verbindungsperiode für das nächste Mal, wenn die Verbindung aktiviert wird.

10. Kommunikationsvorrichtung nach Anspruch 9, wobei die Mittel zum Aktualisieren ausgelegt sind, eine aktualisierte Länge der Verbindungsperiode aus dem einen oder den mehreren Werten (str1, str2) zu berechnen.

11. Kommunikationsvorrichtung (80; LPC1), Folgendes umfassend:
Mittel zum Aktivieren einer Verbindung zur Übertragung eines Datenstroms zwischen der Kommunikationsvorrichtung und einer zweiten Kommunikationsvorrichtung;
Mittel zum Anfordern, während der Verbindungsaktivierung, von Verbindungsparametern von einer dritten Vorrichtung;
Mittel zum Empfangen, von der dritten Vorrichtung, einer Antwort, die eine Länge einer Verbindungsperiode aufweist, die für den Datenstrom verwendet werden soll;
Mittel für eine oder mehrere Übertragungen von Teilen des Datenstroms zwischen der Kommunikationsvorrichtung und der zweiten Kommunikationsvorrichtung durch die Verbindung;
Mittel zum Messen einer Zeit zwischen Übertragungen eines Teils des Datenstroms und eines nachfolgenden Teils des Datenstroms, der durch die Verbindung übertragen wird;
Mittel zum Deaktivieren der Verbindung, wobei die Mittel zum Deaktivieren auf die gemessene Zeit reagieren, die die empfangene Länge der Verbindungsperiode überschreitet, und auf einen Empfang einer Deaktivierungsanfrage von der zweiten Kommunikationsvorrichtung;
Mittel zum Bestimmen, aus dem Datenstrom, eines oder mehrerer Werte für eine oder mehrere vorbestimmte Eigenschaften des Datenstroms; und
Mittel zum Senden des einen oder der mehreren Werte an die dritte Vorrichtung, um die Länge der Verbindungsperiode zu aktualisieren.

12. Kommunikationsvorrichtung nach Anspruch 9, 10 oder 11, wobei die Mittel zum Bestimmen des einen oder der mehreren Werte einen ersten Zähler aufweist, um anzugeben, wie oft die Differenz zwischen der gemessenen Zeit zwischen Übertragungen eines Teils und eines nachfolgenden Teils des Datenstroms und der Länge der Verbindungsperiode kleiner als ein vordefinierter Schwellenwert war; und einen zweiten Zähler, um anzugeben, wie oft die Differenz zwischen zwei aufeinanderfolgenden Messzeiten kleiner als ein weiterer vordefinierter Schwellenwert war.

13. Kommunikationsvorrichtung nach Anspruch 9, 10 oder 11, wobei die Mittel zum Bestimmen des einen oder der mehreren Werte konfiguriert sind, aus dem Datenstrom einen Wert (str2) zu berechnen, der ein Durchschnittsintervall zwischen aufeinanderfolgenden Datenteilen angibt.

14. Vorrichtung (80), Folgendes umfassend:
eine Teilnehmerdatenbank (DB):
Mittel zum Speichern einer Kommunikationsvorrichtung in der Teilnehmerdatenbank für mindestens eine Länge einer Verbindungsperiode (t1);
Mittel zum Empfangen, von der Kommunikationsvorrichtung, eines oder mehrerer Werte, die Eigenschaften eines Datenstroms darstellen;
Mittel zum Verwenden des einen oder der mehreren Werte zum Aktualisieren der Länge der Verbindungsperiode für die Kommunikationsvorrichtung;
Mittel zum Empfangen, von der Kommunikationsvorrichtung, einer Abfrage, die Verbindungsparameter abfragt; und
Mittel zum Senden der Länge der Verbindungsperiode für die Kommunikationsvorrichtung an die Kommunikationsvorrichtung als Antwort auf die Abfrage.

15. Computerprogramm, umfassend einen Programmcode, der ausgelegt ist, die Schritte eines der Ansprüche 1 bis 8 auszuführen.

## Revendications

1. Procédé comprenant :
l'activation (5-2), par un dispositif de communication, d'une liaison pour des transmissions d'un flux de données entre le dispositif de communication et un deuxième dispositif de communication ;
la détermination, par le dispositif de communication, pendant l'activation de liaison d'une durée d'une période de liaison à utiliser pour le flux de données ;
la transmission (5-6) d'un ou de plusieurs éléments du flux de données entre le dispositif de communication et le deuxième dispositif de communication par le biais de la liaison ;
la mesure, par le dispositif de communication, d'un temps entre des transmissions d'un élément du flux de données et un élément ultérieur du flux de données transmis par le biais de la liaison ;
la désactivation (5-7), par le dispositif de communication, de la liaison en réponse au premier du temps mesuré dépassant la durée déterminée de la période de liaison et à la réception en provenance du deuxième dispositif de communication d'une demande de désactivation ;
la détermination (5-6), par le dispositif de communication, à partir du flux de données d'une ou de plusieurs valeurs pour une ou plusieurs propriétés prédéterminées du flux de données ;
l'utilisation (5-14), par le dispositif de communication, des une ou plusieurs valeurs pour mettre à jour la durée de la période de liaison.

2. Procédé comprenant :
l'activation (5-2), par un dispositif de communication, d'une liaison entre le dispositif de communication et un deuxième dispositif de communication pour transmettre un flux de données ;
la demande (5-3), par le dispositif de communication, pendant l'activation de liaison, de paramètres de liaison d'un troisième dispositif ;
la réception (5-4), par le dispositif de communication, en provenance du troisième dispositif d'une réponse incluant une durée d'une période de liaison à utiliser pour le flux de données ;
la transmission (5-6) d'un ou de plusieurs éléments du flux de données entre le dispositif de communication et le deuxième dispositif de communication par le biais de la liaison ;
la mesure, par le dispositif de communication, d'un temps entre des transmissions d'un élément du flux de données et un élément ultérieur du flux de données transmis par le biais de la liaison ;
la désactivation (5-7), par le dispositif de communication, de la liaison en réponse au premier du temps mesuré dépassant la durée reçue de la période de liaison et à la réception en provenance du deuxième dispositif de communication d'une demande de désactivation ;
la détermination (5-6), par le dispositif de communication, à partir du flux de données d'une ou de plusieurs valeurs pour une ou plusieurs propriétés prédéterminées du flux de données ;
l'envoi (5-9), par le dispositif de communication, après la désactivation de liaison, des une ou plusieurs valeurs au troisième dispositif pour mettre à jour la durée de la période de liaison.

3. Procédé comprenant :
la réception (5-3, 5-13), dans un dispositif comprenant une base de données d'abonnés, en provenance d'un dispositif de communication, d'une demande de paramètres de liaison pour un flux de données entre le dispositif de communication et un deuxième dispositif de communication ;
la récupération, par le dispositif, dans la base de données d'abonnés, d'une durée d'une période de liaison à utiliser pour le flux de données ;
l'envoi (5-4, 5-15), par le dispositif, d'une réponse à la demande au dispositif de communication, la réponse incluant la durée récupérée de la période de liaison ;
la réception (5-9), par le dispositif, en provenance du dispositif de communication, d'une ou de plusieurs valeurs pour une ou plusieurs propriétés prédéterminées du flux de données ; et
l'utilisation (5-14), par le dispositif, des une ou plusieurs valeurs pour mettre à jour la durée de la période de liaison dans la base de données d'abonnés.

4. Procédé selon la revendication 1, 2 ou 3, dans lequel les une ou plusieurs valeurs incluent des valeurs de flux changeant selon le débit des paquets de données dans le flux de données.

5. Procédé selon la revendication 1, 2, 3 ou 4, dans lequel une valeur des une ou plusieurs valeurs est déterminée à partir du flux de données lorsqu'il est transmis par le biais de la liaison, ou lorsque le flux de données est prêt à être transmis ensuite du dispositif de communication au deuxième dispositif de communication par le biais de la liaison, ou lorsque le flux de données attend d'être transmis du dispositif de communication au deuxième dispositif de communication par le biais de la liaison après une procédure définie ou un intervalle de temps défini.

6. Procédé selon la revendication 5, dans lequel l'une des une ou plusieurs propriétés prédéterminées du flux de données est une longueur d'un intervalle entre des paquets de données ultérieurs dans le flux de données, une identité de l'un des deux dispositifs de communication, une adresse de l'un des dispositifs de communication, ou des données d'abonnés associées à l'identité de l'un des dispositifs de communication.

7. Procédé selon l'une quelconque des revendications 1 à 6 précédentes, comprenant en outre l'application dans la mise à jour d'un premier compteur de proximité qui indique le nombre de fois où la différence entre le temps entre une transmission d'un élément et un élément ultérieur du flux de données, et le temps pour désactiver la liaison a été inférieure à une valeur seuil prédéfinie.

8. Procédé selon l'une quelconque des revendications 1 à 6 précédentes, comprenant en outre :
le calcul à partir d'un flux de données d'une valeur de flux (str2) qui indique un intervalle moyen entre des paquets de données successifs ; et
la mise à jour de la durée de la période de liaison selon la valeur de flux calculée.

9. Dispositif de communication (80 ; LCP1), comprenant :
des moyens pour activer une liaison pour la transmission d'un flux de données entre le dispositif de communication et un deuxième dispositif de communication ;
des moyens pour déterminer une durée d'une période de liaison à utiliser pour le flux de données ;
des moyens pour une ou plusieurs transmissions d'éléments du flux de données entre le dispositif de communication et le deuxième dispositif de communication par le biais de la liaison ;
des moyens pour mesurer un temps entre une transmission d'un élément du flux de données et un élément ultérieur du flux de données transmis par le biais de la liaison ;
des moyens pour désactiver la liaison, les moyens de désactivation répondant au temps mesuré dépassant la durée déterminée de la période de liaison et à une réception d'une demande de désactivation en provenance du deuxième dispositif de communication ; et
des moyens pour déterminer à partir du flux de données une ou plusieurs valeurs pour une ou plusieurs propriétés prédéterminées du flux de données ; et
des moyens pour utiliser les une ou plusieurs valeurs pour mettre à jour la durée de la période de liaison pour la fois suivante où la liaison est activée.

10. Dispositif de communication selon la revendication 9, dans lequel les moyens de mise à jour sont adaptés pour calculer une durée mise à jour de la période de liaison à partir des une ou plusieurs valeurs (str1, str2).

11. Dispositif de communication (80 ; LCP1), comprenant :
des moyens pour activer une liaison pour une transmission d'un flux de données entre le dispositif de communication et un deuxième dispositif de communication ;
des moyens pour demander pendant l'activation de liaison des paramètres de liaison d'un troisième dispositif ;
des moyens pour recevoir en provenance du troisième dispositif une réponse incluant une durée d'une période de liaison à utiliser pour le flux de données ;
des moyens pour une ou plusieurs transmissions d'éléments du flux de données entre le dispositif de communication et le deuxième dispositif de communication par le biais de la liaison ;
des moyens pour mesurer un temps entre une transmission d'un élément du flux de données et un élément ultérieur du flux de données transmis par le biais de la liaison ;
des moyens pour désactiver la liaison, les moyens de désactivation répondant au temps mesuré dépassant la durée reçue de la période de liaison et à une réception d'une demande de désactivation en provenance du deuxième dispositif de communication ;
des moyens pour déterminer à partir du flux de données une ou plusieurs valeurs pour une ou plusieurs propriétés prédéterminées du flux de données ; et
des moyens pour envoyer les une ou plusieurs valeurs au troisième dispositif pour mettre à jour la durée de la période de liaison.

12. Dispositif de communication selon la revendication 9, 10 ou 11, dans lequel les moyens de détermination des une ou plusieurs valeurs comprennent un premier compteur pour indiquer le nombre de fois où la différence entre le temps mesuré entre des transmissions d'un élément et un élément ultérieur du flux de données et la durée de la période de liaison a été inférieure à une valeur seuil prédéfinie ; et un second compteur pour indiquer le nombre de fois où la différence entre deux temps mesurés consécutifs a été inférieure à une valeur seuil prédéfinie supplémentaire.

13. Dispositif de communication selon la revendication 9, 10 ou 11, dans lequel les moyens de détermination des une ou plusieurs valeurs sont configurés pour calculer à partir du flux de données une valeur (str2) qui indique un intervalle moyen entre des éléments de données successifs.

14. Dispositif (80) comprenant :
une base de données d'abonnés (DB) ;
des moyens pour stocker, dans la base de données d'abonnés, pour un dispositif de communication au moins une durée d'une période de liaison (t1) ;
des moyens pour recevoir en provenance du dispositif de communication une ou plusieurs valeurs représentant des propriétés d'un flux de données ;
des moyens pour utiliser les une ou plusieurs valeurs pour mettre à jour la durée de la période de liaison pour le dispositif de communication ;
des moyens pour recevoir en provenance du dispositif de communication une requête requérant des paramètres de liaison ; et
des moyens pour envoyer la durée de la période de liaison pour le dispositif de communication au dispositif de communication en réponse à la requête.

15. Programme d'ordinateur comprenant un code de programme adapté pour réaliser les étapes de l'une quelconque des revendications 1 à 8.
